# EUROPÄISCHE PATENTSCHRIFT

(11) **EP 3 620 636 B1**
(45) Veröffentlichungstag und Bekanntmachung des Hinweises auf die Patenterteilung: **25.08.2021**
(21) Anmeldenummer: 19194529.4
(22) Anmeldetag: 30.08.2019
(51) Int. Cl.: F02D 13/02, F15B 15/26, F16F 1/00

(54) **DRUCKLUFTENTNAHMEVENTIL**
COMPRESSED AIR EXTRACTION VALVE
SOUPAPE DE PRISE D'AIR COMPRIMÉ

(30) Priorität: 06.09.2018 DE 102018121722
(43) Veröffentlichungstag der Anmeldung: 11.03.2020
(73) Patentinhaber: MAN Truck & Bus SE, 80995 München (DE)
(72) Erfinder: Hirschmann, Steffen, 91413 Neustadt an der Aisch (DE); Grüger, Florian, 90419 Nürnberg (DE)
(74) Vertreter: v. Bezold & Partner Patentanwälte - PartG mbB

(56) Entgegenhaltungen:
- EP-A2- 0 659 947
- DE-A1- 3 903 474
- DE-C1- 4 309 860
- US-A- 3 403 667
- US-A- 3 665 813

## Beschreibung

Die Erfindung betrifft ein Druckluftentnahmeventil, für eine Brennkraftmaschine, aufweisend eine Arretiervorrichtung.

Ein Ventil kann mit einer Arretiervorrichtung ausgestattet sein, die es ermöglicht, das Ventil in einer bestimmen Stellung zu arretieren. Die Arretiervorrichtung kann auf unterschiedliche Weise ausgeführt sein.

Zum Beispiel offenbart die DE 40 35 376 A1 eine Betätigungseinrichtung für ein einen Ventilschaft aufweisendes Ladungswechselventil einer Brennkraftmaschine mit einer Schließfeder zum Bewegen des Ventils in eine Schließstellung. Der Ventilschaft trägt einen Magnetanker, der zusammen mit einer außerhalb des Ventils angeordneten, von einem Steuergerät angesteuerten Magnetwicklung eine Arretiervorrichtung für das in seine Öffnungsstellung bewegte Ventil bildet.

DE 10 2004 027 967 B4 offenbart ein Gaswechselventil für eine Brennkraftmaschine, mit einem hydraulisch oder elektromechanisch betätigten Ventilglied und einer entgegen einer Öffnungsrichtung des Ventilglieds auf dasselbe einwirkenden Feder, die während des Betriebs der Brennkraftmaschine in gespanntem Zustand arretierbar ist.

Die DE 43 09 860 C1 offenbart eine Vorrichtung zur Steuerung von in einem Zylinder einer Brennkraftmaschine durch einen Kolben komprimierter Luft mittels eines Steuerventils, das von einem elektronischen Steuergerät in einem Verdichtungshub des Kolbens während unterschiedlicher Vor-OT-Stellungen in eine Öffnungs- oder Schließstellung verstellbar ist. Die über das Steuerventil dem Zylinder entnommene Luft ist in eine Abgasleitung abführbar.

Die EP 0 659 947 A2 bezieht sich auf eine Steueranordnung für ein durch Unterdruck betätigbares Absperrventil für ein Unterdruck-Abwassersystem. Die Steueranordnung umfasst einen Hauptkolben, über den Ventile betätigbar sind, um unabhängig voneinander sowohl ein Absaug- als auch ein Belüftungsventil zu öffnen bzw. zu schließen.

Der Erfindung liegt die Aufgabe zu Grunde, eine alternative und/oder verbesserte Arretierung, vorzugsweise für ein Ventil, zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Arretiervorrichtung weist einen Spannring auf. Die Arretiervorrichtung weist einen Schaft, nämlich einen Ventilschaft (z. B. eines Hubventils, vorzugsweise eines Tellerventils), auf, der axial verschiebbar gelagert ist. Der Schaft ist koaxial innerhalb des Spannrings angeordnet und weist eine Nut, vorzugsweise eine Ringnut, auf. Die Arretiervorrichtung weist mindestens ein Arretierelement auf, das (z. B. radial) zwischen dem Schaft und dem Spannring angeordnet ist. Das mindestens eine Arretierelement ist radial bezüglich des Schafts bewegbar und von dem Spannring zum Eingreifen in die Nut zum axialen Arretieren des Schafts vorgespannt. Zweckmäßig verschiebt die Nut das mindestens eine Arretierelement zum Lösen der Arretierung des Schafts radial weg von dem Schaft (bzw. radial nach außen), wenn eine auf den Schaft wirkende Axialkraft eine durch den Spannring und das mindestens eine Arretierelement bewirkte Arretierkraft überschreitet, zweckmäßig unter einer radialen Dehnung des Spannrings nach außen.

Die Arretiervorrichtung mit dem Spannring weist einen einfachen, kostengünstigen und doch wirkungsvollen Aufbau auf. Die Arretiervorrichtung kann sehr klein dimensioniert sein, sodass sie nicht viel Bauraum benötigt. Zum Freigeben der Arretierung sind zudem keine zusätzlichen Mittel erforderlich. Stattdessen ist das System lediglich so auszulegen, dass eine bestimmte Axialkraft auf den Schaft aufgebracht werden kann, die die Arretierkraft überschreitet, sodass die Arretierung gelöst wird. Es ist prinzipiell möglich, das die Axialkraft in beide Axialrichtungen aufgebracht werden kann, um den Schaft in der entsprechenden Richtung zu verschieben.

Es ist möglich, dass das mindestens eine Arretierelement und der Spannring separat ausgebildet sind. Alternativ kann das mindestens eine Arretierelement integral-einstückig mit dem Spannring ausgebildet sein, vorzugsweise an einem Innenumfang des Spannrings. Bspw. kann das mindestens eine Arretierelement an den Spannring anvulkanisiert sein und/oder als eine, vorzugsweise innenseitige, Erhebung des Spannrings gebildet sein.

In einem Ausführungsbeispiel weist die Nut eine gewölbte, gekrümmte, angefaste und/oder angeschrägte Kontaktfläche (vorzugsweise zum Kontaktieren des mindestens einen Arretierelements) zum radialen Ausschieben des mindestens einen Arretierelements auf. Alternativ oder zusätzlich weist das mindestens eine Arretierelement eine gewölbte, gekrümmte, angefaste und/oder angeschrägte Kontaktfläche (vorzugsweise zum Kontaktieren der Nut) auf, um von der Nut radial aus der Nut ausgeschoben zu werden. Die geometrische Anpassung der Nut an das mindestens eine Arretierelement ermöglicht das radiale Ausschieben aus der Nut durch die Nut zum Lösen der Arretierung.

Es ist beispielsweise auch möglich, dass das mindestens eine Arretierelement eine Kugel ist.

Zweckmäßig kann die Nut beispielsweise angefast sein, vorzugsweise in einem spitzen Winkel (z. B. 30°).

In einem weiteren Ausführungsbeispiel weist der Schaft eine weitere Nut, vorzugsweise eine Ringnut, für das mindestens eine Arretierelement auf, wobei die weitere Nut axial versetzt zu der Nut ist. Somit kann der Schaft in einer ersten Stellung, zum Beispiel einer Öffnungsstellung eines Ventils, durch die Nut und in einer zweiten Stellung, zum Beispiel einer Schließstellung des Ventils, durch die zweite Nut arretiert werden.

In einer Weiterbildung verschiebt die weitere Nut das mindestens eine Arretierelement zum Lösen der Arretierung des Schafts radial weg von dem Schaft, wenn eine auf den Schaft wirkende Axialkraft eine durch den Spannring und das mindestens eine Arretierelement bewirkte Arretierkraft überschreitet. Somit müssen keine zusätzlichen Mittel zum Lösen der Arretierung durch den Eingriff des mindestens einen Arretierelements in die weitere Nut vorgesehen werden.

Es ist möglich, dass die weitere Nut, zum Beispiel teilweise oder vollständig, wie die Nut ausgeführt ist.

In einer Ausführungsform weist das mindestens eine Arretierelement mehrere in Umfangsrichtung um den Schaft herum angerordnete Arretierelemente auf, die vorzugsweise symmetrisch (z. B. drehsymmetrisch) um den Schaft herum angeordnet sind und/oder vorzugsweise eine ungerade Anzahl aufweisen. Die mehreren, symmetrisch angeordneten Arretierelemente ermöglichen eine gleichmäßige Arretierung des Schafts um dessen Umfang. Die vorzugsweise ungerade Anzahl führt dazu, dass sich Arretierelemente nicht direkt gegenüber liegen, sodass sich beispielsweise eine Zentrierung durch die Arretierelemente verbessern lässt.

In einer weiteren Ausführungsform weist die Arretiervorrichtung eine Halterung auf, die das mindestens eine Arretierelement und/oder den Spannring hält.

Es ist möglich, dass die Halterung in einem Ventil umfasst ist und/oder in einem Zylinderkopf einer Brennkraftmaschine angeordnet, vorzugsweise befestigt, ist.

In einer Weiterbildung hält die Halterung das mindestens eine Arretierelement und/oder den Spannring bezüglich einer Axialrichtung des Schafts fest. Alternativ oder zusätzlich hält die Halterung das mindestens eine Arretierelement und/oder den Spannring bezüglich einer Radialrichtung des Schafts beweglich, vorzugsweise verschiebbar.

In einem weiteren Ausführungsbeispiel weist die Halterung eine äußere Umfangsnut auf, in der der Spannring gehalten ist. Alternativ oder zusätzlich weist die Halterung ein (zum Beispiel zentrales) axiales Durchgangsloch für den Schaft auf. Alternativ oder ergänzend weist die Halterung mindestens ein radiales Durchgangsloch auf, in dem das mindestens eine Arretierelement gehalten ist.

In einer Ausführungsvariante ist der Spannring als ein Elastomer-Spannring, vorzugsweise ein Gummispannring, oder eine Schlauchfeder ausgebildet.

In einer weiteren Ausführungsvariante liegt der Spannring an dem mindestens einen Arretierelement, z. B. radial außen, an. Alternativ oder zusätzlich kann der Spannring an einer Innenumfangsfläche des Spannrings mindestens eine Aufnahme (z. B. Ringnut oder Tasche) zum Halten des mindestens einen Arretierelements aufweisen.

Erfindungsgemäss ist das Ventil in einer Öffnungsstellung arretiert, wenn das mindestens eine Arretierelement in die Nut eingreift. Zusätzlich kann das Ventil in einer Schließstellung arretiert sein, wenn das mindestens eine Arretierelement in die weitere Nut eingreift. Damit kann das Ventil durch die Arretiervorrichtung in der Öffnungsstellung und in der Schließstellung arretiert werden.

Erfindungsgemäß ist das Ventil ein Druckluftentnahmeventil zur selektiven Entnahme von Druckluft aus einer Verbrennungskammer der Brennkraftmaschine.

Zweckmäßig kann das Druckluftentnahmeventil zusätzlich bzw. separat von den Gaswechselventilen, zum Beispiel Lufteinlassventile und Abgasauslassventile, der Brennkraftmaschine vorgesehen bzw. angeordnet sein.

In einer weiteren Ausführungsform ist das Ventil elektrisch, elektromagnetisch, mechanisch, pneumatisch und/oder hydraulisch zum axialen Verschieben des Schafts in eine Öffnungsstellung des Ventils, betätigbar. Vorzugsweise greift das mindestens eine Arretierelement in die Nut zum Arretieren des Schafts ein, wenn das Ventil in der Öffnungsstellung ist. Erfindungsgemäß ist das Ventil mittels einer auf ein beispielsweise brennraumseitiges Tellerelement des Ventils wirkenden Gaskraft, die durch einen Zylinderdruck in einer Verbrennungskammer der Brennkraftmaschine bewirkt wird, betätigbar, nämlich schließbar, wobei die die Arretierkraft überschreitende Axialkraft zum Lösen der Arretierung teilweise oder vollständig durch die Gaskraft bewirkt. Es ist möglich, dass bspw. zusätzlich ein elastisches Element, z. B. eine Feder, angeordnet ist, das die Arretierkraft erhöht.

Beispielsweise kann die Gaskraft bewirken, dass die axiale Arretierung durch Ausschieben des mindestens einen Arretierelements aus der Nut durch die Nut gelöst wird.

Die vorliegende Offenbarung betrifft somit zweckmäßig auch eine Verwendung des hierin offenbarten Ventils bzw. ein Verfahren zum Betätigen eines Ventils wie hierin offenbart. Die Verwendung bzw. das Verfahren weist ein Lösen einer Arretierung durch die Arretiervorrichtung des in einer Öffnungsstellung positionierten Ventils durch Aufbringen einer Axialkraft auf den Ventilschaft mittels einer Gaskraft, die durch einen Zylinderdruck in einer Verbrennungskammer der Brennkraftmaschine bewirkt wird, auf. Erfindungsgemäss wirkt die Gaskraft auf ein brennraumseitiges Tellerelement des Ventils.

Die Erfindung betrifft auch ein Kraftfahrzeug, vorzugsweise ein Nutzfahrzeug (z. B. Lastkraftwagen oder Omnibus), mit einer Arretiervorrichtung wie hierin offenbart oder einem Ventil wie hierin offenbart.

Es ist auch möglich, die Vorrichtung wie hierin offenbart für Personenkraftwagen, Großmotoren, geländegängige Fahrzeuge, stationäre Motoren, Marinemotoren, andere Anlagen usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schnittansicht durch einen Abschnitt eines Zylinderkopfes mit einem Ventil gemäß einem Ausführungsbeispiel der vorliegenden Offenbarung in einer Schließstellung;
- Figur 2: eine Schnittansicht gemäß Figur 1, mit dem beispielhaften Ventil in einer Öffnungsstellung;
- Figur 3: eine Längsschnittansicht einer Arretiervorrichtung des beispielhaften Ventils; und
- Figur 4: eine Querschnittansicht der beispielhaften Arretiervorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

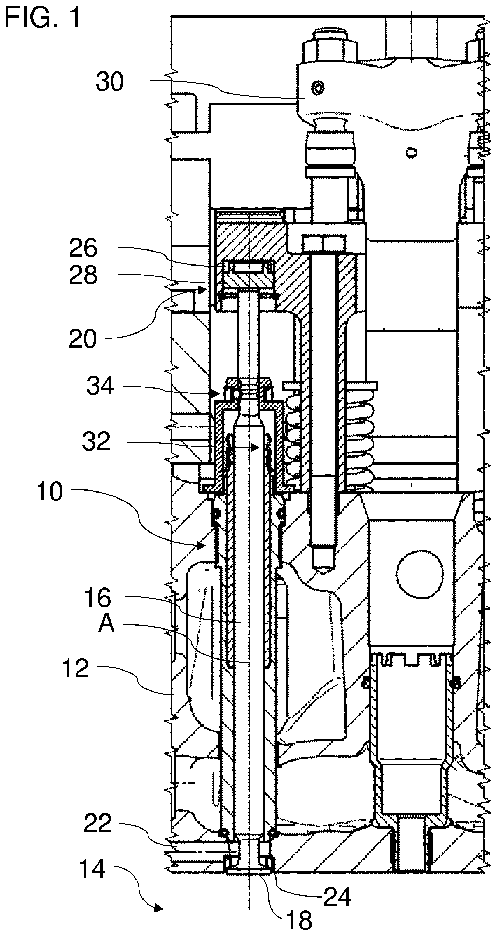

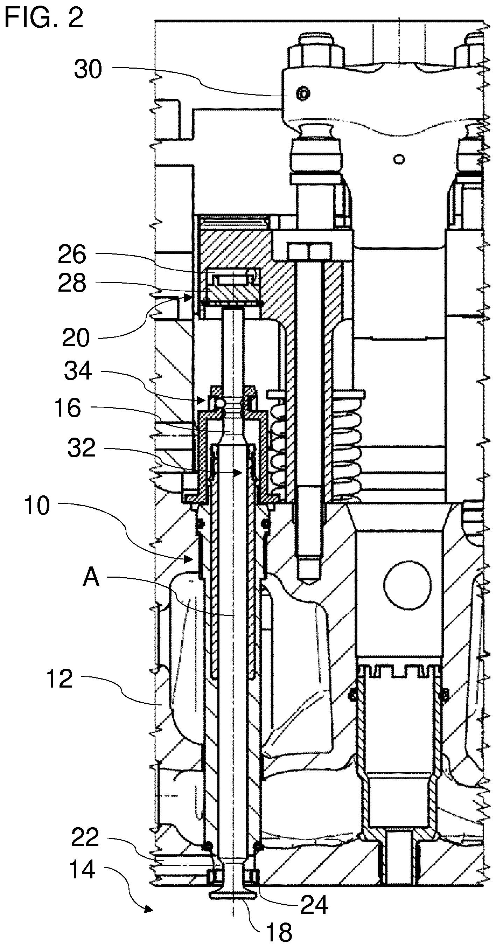

Die Figuren 1 und 2 zeigen ein Ventil 10, das in einem Zylinderkopf 12 einer Brennkraftmaschine angeordnet ist. Die Brennkraftmaschine kann in einem Kraftfahrzeug, vorzugsweise einem Nutzfahrzeug, z. B. Lastkraftwagen oder Omnibus, umfasst sein.

Im Ausführungsbeispiel ist das Ventil 10 als ein Druckluftentnahmeventil ausgeführt. Das Ventil 10 dient zur selektiven Entnahme von Druckluft aus einer von dem Zylinderkopf 12 abgedeckten Verbrennungskammer 14, z. B. während eines Verdichtungstaktes und/oder während eines Ausschiebetaktes. Die Druckluft kann beispielsweise zum Betreiben einer Betriebs- und/oder Feststellbremsvorrichtung und/oder einer Luftfederanlage des Kraftfahrzeugs verwendet werden. Es ist allerdings auch möglich, dass das Ventil 10 nicht als Druckluftentnahmeventil ausgeführt ist und/oder in einer Anlage, die sich von einer Brennkraftmaschine unterscheidet, umfasst ist.

Das Ventil 10 weist einen Schaft 16 und ein Tellerelement 18 auf. Das Ventil 10 kann über eine Betätigungseinrichtung 20 betätigt, vorzugsweise geöffnet, werden. Das Ventil 10 kann beispielsweise benachbart zu einer Aufnahme für einen Kraftstoffinjektor angeordnet sein, wie dargestellt ist.

Der Schaft 16 ist als ein länglicher Ventilschaft des Ventils 10 ausgeführt. Der Schaft 16 ist entlang seiner Längsachse A verschiebbar gelagert, z. B. in einer Ventilführung. Der Schaft 16 kann beispielsweise einen Durchmesser von 6 mm ± 50 %, vorzugsweise 6 mm ± 25 %, aufweisen.

Das Tellerelement 18 ist an einem vorderen Ende des Schafts 16 angeordnet. Das Tellerelement 18 ist mit dem Schaft 16 verbunden, z. B. integral einstückig ausgeführt. Das Tellerelement 18 bewegt sich gemeinsam mit dem Schaft 16. Das Tellerelement 18 ist der Verbrennungskammer 14 zugewandt. Das Tellerelement 18 kann beispielsweise einen Durchmesser von 14 mm ± 50 %, vorzugsweise 14 mm ± 25 %, aufweisen.

In einer Schließstellung des Ventils 10 (siehe Figur 1) dichtet das Tellerelement 18 im Wesentlichen zwischen der Verbrennungskammer 14 und einem Fluidkanal (zum Beispiel Druckluftkanal) 22 im Zylinderkopf 12 ab. Das Tellerelement 18 liegt an einem Ventilsitz 24 im Zylinderkopf 12 an. In einer Öffnungsstellung des Ventils 10 (siehe Figur 2) ist das Tellerelement 18 beabstandet von dem Ventilsitz 24. Fluid, vorzugsweise Druckluft, aus der Verbrennungskammer 14 kann in den Fluidkanal 22 strömen.

Die Betätigungseinrichtung 20 ist dazu ausgebildet, das Ventil 10 zu öffnen. Zum Öffnen des Ventils 10 verschiebt die Betätigungseinrichtung 20 den Schaft 16 zusammen mit dem Tellerelement 18 in einer Richtung zu der Verbrennungskammer 14. Das Tellerelement 18 hebt vom Ventilsitz 24 ab und gibt eine Fluidverbindung zu dem Fluidkanal 22 frei. Die Betätigungseinrichtung 20 kann, wie dargestellt ist, an einem hinteren Ende des Schafts 16 angeordnet sein. Andere Anordnungen für die Betätigungseinrichtung 20 sind ebenfalls möglich.

Beispielsweise kann die Betätigungseinrichtung 20 eine Steuerkammer 26 und einen Steuerkolben 28 aufweisen. Der Steuerkolben 28 ist axial verschiebbar in der Steuerkammer 26 aufgenommen. Der Steuerkolben 28 ist direkt oder indirekt mit dem Schaft 16 zum Verschieben des Schafts 16 verbunden. Wenn beispielsweise die Steuerkammer 26 mit einem Fluid, zum Beispiel Druckluft oder Hydraulikfluid, beaufschlagt wird, wird der Steuerkolben 28 in einer Axialrichtung zu dem Schaft 16 verschoben. Das Ventil 10 wird geöffnet. Die Betätigungseinrichtung 20 kann beispielsweise auch mit einer Hebelvorrichtung 30, zum Beispiel einem Einlass- oder Auslassventilkipphebel, eines Ventiltriebs gekoppelt sein, sodass die Betätigungseinrichtung 20 zweckmäßig selbst von Hebelvorrichtung 30 direkt oder indirekt betätigbar ist. Es ist auch möglich, dass die Betätigungseinrichtung 20 das Ventil 10 zusätzlich oder alternativ mechanisch, elektrisch, elektromagnetisch und/oder andersartig hydraulisch und/oder pneumatisch betätigt.

Das Ventil 10 kann eine Dichtvorrichtung 32 aufweisen. Die Dichtvorrichtung 32 kann zwischen dem Schaft 16 und der Ventilführung fluiddicht abdichten.

Das Ventil 10 weist eine Arretiervorrichtung 34 auf. Die Arretiervorrichtung 34 ist am Zylinderkopf 12 angeordnet, wobei hier prinzipiell verschiedene Varianten der Anordnung, z. B. in, an oder auf dem Zylinderkopf, möglich sind. Beispielsweise kann die Arretiervorrichtung 34 bezüglich einer Längsachse des Ventils 10 zwischen der Dichtvorrichtung 32 und einem hinteren Ende des Schafts 16 angeordnet sein. Die Arretiervorrichtung 34 kann das Ventil 10 in dessen Öffnungsstellung und dessen Schließstellung arretieren. Es ist auch möglich, dass die Arretiervorrichtung 34, zum Beispiel in Abhängigkeit von einer Konstruktion der Betätigungseinrichtung 20, das Ventil 10 entweder nur in dessen Öffnungsstellung oder nur in dessen Schließstellung arretiert.

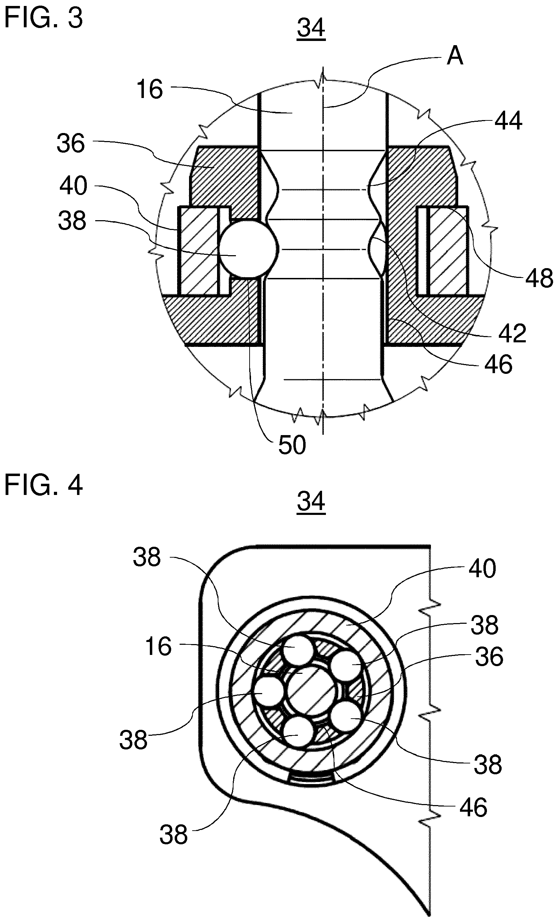

Nachfolgend ist unter Bezugnahme auf die Figuren 3 und 4 eine beispielhafte Ausführungsform für die Arretiervorrichtung 34 beschrieben, die besonders vorteilhaft zum Arretieren des Ventils 10 verwendet werden kann. Es wurde allerdings erkannt, dass die Arretiervorrichtung 34 gemäß der vorliegenden Offenbarung auch zum Arretieren anderer Ventile und auch anderer Schäfte, die beispielsweise nicht in einem Ventil umfasst sind, eingesetzt werden kann.

Die Figuren 3 und 4 zeigen die Arretiervorrichtung 34 in einer Längsschnittansicht und einer Querschnittansicht.

Die Arretiervorrichtung 34 kann zweckmäßig eine Halterung 36, mehrere Arretierelemente 38, einen Spannring 40 und Nuten 42 und 44 am Schaft 16 aufweisen. Die Arretiervorrichtung 34 kann beispielsweise auch mehr oder weniger Nuten und/oder mehr oder weniger Arretierelemente als im Ausführungsbeispiel aufweisen. Vorteilhaft kann die Arretiervorrichtung 34, wie dargestellt ist, als eine Kugel-Arretiervorrichtung mit kugelförmigen Arretierelementen 38 ausgebildet sein.

Die Halterung 36 dient zur Anordnung der Arretiervorrichtung 34 z. B. am Zylinderkopf 12 (siehe Figuren 1 und 2). Die Halterung 36 hält den Spannring 40 bezüglich einer Längsachse A des Schafts 16 axial fest und radial verschiebbar bzw. dehnbar. Die Halterung 36 hält die mehreren Arretierelemente 38 bezüglich der Längsachse A axial fest und radial verschiebbar.

Die Halterung 36 kann ein zweckmäßig zentrales, axiales Durchgangsloch 46 für den Schaft 16 aufweisen. Das Durchgangsloch 46 ist vorzugsweise axial mit der Längsachse A ausgerichtet. Die Halterung 36 kann eine äußere Umfangsnut 48 zum Halten des Spannrings 40 aufweisen. Die Halterung 36 kann mehrere radiale Durchgangslöcher 50 zum Halten der Arretierelemente 38 aufweisen. Die Durchgangslöcher 50 können sich zwischen einer Innenumfangsfläche des Durchgangslochs 46 und einer Bodenfläche der Umfangsnut 48 erstrecken, vorzugsweise in einer Richtung senkrecht zur Längsachse A. Die Durchgangslöcher 50 können symmetrisch um den Schaft 16 herum angeordnet sein. Vorzugsweise sind die Durchgangslöcher 50 drehsymmetrisch um den Schaft 16 herum angeordnet, insbesondere N-fach drehsymmetrisch, wobei N hier die Anzahl der Durchgangslöcher 50 angibt.

Die mehreren Arretierelemente 38 sind radial zwischen dem Schaft 16 und dem Spannring 40 angeordnet. Der Schaft 16 ist radial innenliegend von den Arretierelementen 38 angeordnet. Der Spannring 40 ist radial außenliegend von den Arretierelementen 38 angeordnet. Die Arretierelemente 38 sind bezüglich der Längsachse A radial beweglich und axial unbeweglich gehalten. Die Arretierelemente 38 sind so ausgeführt, dass sie in die Nuten 42 und 44 zum Arretieren des Schafts 16 eingreifen können. Beispielsweise sind die Arretierelemente 38 als Kugeln ausgeführt, wie dargestellt ist.

Die mehreren Arretierelemente 38 können symmetrisch um den Schaft 16 herum angeordnet sein. Zweckmäßig können die Arretierelemente 38 - wie die Durchgangslöcher 50 - drehsymmetrisch um den Schaft 16 herum angeordnet sein, insbesondere N-fach drehsymmetrisch, wobei N hier die Anzahl der Arretierelemente 38 angibt. Zweckmäßig weisen die Arretierelemente 38 eine ungerade Anzahl auf, sodass sich die Arretierelemente 38 nicht direkt gegenüber liegen und sich eine verbesserte Zentrierung des Schafts 16 durch die Arretierelemente 38 ergibt. Im Ausführungsbeispiel sind beispielsweise fünf Arretierelemente 38 umfasst.

Der Spannring 40 umgibt die Arretierelemente 38. Der Spannring 40 kann eine flächige Innenumfangsfläche aufweisen, wie dargestellt ist. Es ist aber auch möglich, dass der Spannring 40 an dessen Innenumfangsfläche beispielsweise mehrere Taschen zum Halten der Arretierelemente 38 oder eine Ringnut zum Halten der Arretierelemente 38 aufweist.

Der Spannring 40 ist koaxial zum Schaft 16 bzw. der Längsachse A angeordnet. Der Spannring 40 ist so ausgebildet, dass die Arretierelemente 38 in einer Radialrichtung zu dem Schaft 16 vorgespannt sind. Somit können die Arretierelemente 38 in die Nuten 42, 44 eingreifen. Greifen die Arretierelemente 38 beispielsweise in die Nut 42 ein, kann das Ventil 10 in dessen Schließstellung arretiert sein (siehe Figur 1). Greifen die Arretierelemente 38 beispielsweise in die Nut 44 ein, kann das Ventil 10 in dessen Öffnungsstellung arretiert sein (siehe Figur 2).

Der Spannring 40 kann beispielsweise als ein Elastomer-Spannring, zum Beispiel ein Gummispannring ausgeführt sein, der die Spannkraft zum Vorspannen der Arretierelemente 38 aus dessen elastischen Materialeigenschaften ableitet. Es ist allerdings auch möglich, dass der Spannring 40 beispielsweise als eine ringförmige Schlauchfeder oder ringförmige Schraubenfeder ausgeführt ist.

Die Nuten 42, 44 sind bezüglich der Längsachse A axial versetzt zueinander angeordnet. Die Nuten 42, 44 sind zweckmäßig als Ringnuten in einer Mantelfläche des Schafts 16 ausgebildet. Die Nuten 42, 44 können beispielsweise jeweils eine Breite von 3 mm ± 50 %, vorzugsweise 3 mm ± 25 %, aufweisen.

Die Nuten 42, 44 sind jeweils so ausgeführt, dass sie die Arretierelemente 38 zum Lösen der Arretierung des Schafts 16 bezüglich der Nut 42 oder 44 in einer Radialrichtung weg von dem Schaft 16 verschieben können. Hierzu wird eine Axialkraft auf den Schaft 16 in einer Richtung der gewünschten Verschiebung aufgebracht. Wenn die aufgebrachte Axialkraft die durch den Spannring 40 und die Arretierelemente 38 aufgebrachte Arretierkraft überschreitet, werden die Arretierelemente 38 von der jeweiligen Nut 42 oder 44 jeweils radial nach außen gedrückt. So kann der Schaft 16 beispielsweise zwischen einer Arretierung mittels der Nut 42, zum Beispiel zum Geschlossenhalten des Ventils 10, und einer Arretierung mittels der Nut 44, zum Beispiel zum Offenhalten des Ventils 10, hin- und hergeschoben werden. Beispielsweise kann der Spannring 40 so ausgebildet sein, dass eine von der Arretiervorrichtung 34 durch den Spannring 40 aufgebrachte Arretierkraft 100 N ± 50 %, vorzugsweise 100 N ± 25 %, beträgt.

Beispielsweise kann die Axialkraft zum Ausschieben der Arretierelemente 38 aus der Nut 42 von der Betätigungseinrichtung 20 aufgebracht werden, zweckmäßig zum Öffnen des Ventils 10. Der Schaft 16 bewegt sich in einer Richtung zu der Verbrennungskammer 14 bis er durch die in die Nut 44 eingreifenden Arretierelemente 38 arretiert wird. Eine entgegengesetzt gerichtete Axialkraft, die wiederum die Arretierkraft überschreitet, kann die Arretierelemente 38 dann wieder aus der Nut 44 ausschieben, zum Beispiel zum Schließen des Ventils 10. Diese entgegengesetzt gerichtete Axialkraft kann besonders vorteilhaft durch eine Gaskraft aufgebracht werden, die auf das Tellerelement 18 aus der Verbrennungskammer 14 wirkt. Ein erhöhter Zylinderdruck beispielsweise während eines Verdichtungs- oder Ausschubtaktes kann diese Gaskraft bewirken.

Somit kann das Ventil 10 zur Druckluftentnahme beispielsweise wie folgt betätigt werden. Das Ventil 10 wird durch die Betätigungseinrichtung 20 beispielsweise zu Beginn des Verdichtungstaktes oder früher, z. B. während oder zu Beginn des Ansaugtaktes, geöffnet. Dabei werden die Arretierelemente 38 aus der Nut 42 ausgeschoben. Das Ventil 10 wird durch die nun in die Nut 44 eingreifenden Arretierelemente 38 offengehalten. Verdichtete Luft strömt durch das offen gehaltene Ventil 10 in den Fluidkanal 22 und kann somit wie gewünscht weiterverwendet werden. Während des Verdichtungstaktes steigt der Druck in der Verbrennungskammer 14 stetig an. Zu einem bestimmten Zeitpunkt ist der Zylinderdruck so groß, dass die durch diesen bewirkte Gaskraft auf das Tellerelement 18 die Arretierkraft der Arretiervorrichtung 34 überschreitet. Die Arretierelemente 38 werden aus der Nut 44 ausgeschoben. Das Ventil 10 schließt. Das Ventil 10 wird durch die in die Nut 44 eingreifenden Arretierelemente 38 geschlossen gehalten.

Um ein Ausschieben der Arretierelemente 38 aus den Nuten 42 und 44 zu ermöglichen, sind diese zweckmäßig geometrisch aneinander angepasst. Wie dargestellt ist, können die Nuten 42 und 44 beispielsweise gewölbt oder angefast, zum Beispiel mit einem Winkel von 30°, ausgebildet sein. Die Arretierelemente 38 können als Kugeln ausgebildet sein, z. B mit einem Kugeldurchmesser von 3 mm ± 50 %, vorzugsweise 3 mm ± 25 %. Es ist allerdings auch möglich, dass die Arretierelemente 38 und/oder die Nuten 42, 44 anderweitig aneinander geometrisch angepasst sind, solange dadurch ein Ausschieben der Arretierelemente 38 aus den Nuten 42, 44 ermöglicht wird. Beispielsweise können die Kontaktflächen der Arretierelemente 38 und/oder der Nuten 42, 44 gewölbt, gekrümmt und/oder angeschrägt sein.

Beim Ausschieben der Arretierelemente 38 aus der Nut 42 oder 44 wird der Spannring 40 radial nach außen gedehnt. Hierbei kann sich eine durch den Spannring 40 bewirkte radial nach innen wirkende Arretierkraft erhöhen. Zweckmäßig ist der Spannring 40 so ausgebildet, dass sich die Vergrößerung der Arretierkraft durch die Dehnung des Spannrings 40 in einem Bereich kleiner als 50 % der Arretierkraft, wenn die Arretierelemente 38 in Eingriff mit der Nut 42 oder 44 sind, beträgt. Beispielsweise kann der Spannring 40 so ausgebildet, dass die Vergrößerung der Arretierkraft durch die Dehnung des Spannrings 40 kleiner als 30 N ± 50 %, vorzugsweise kleiner als 30 N ± 25 %, ist.

### Bezugszeichenliste

- A: Längsachse
- 10: Ventil
- 12: Zylinderkopf
- 14: Verbrennungskammer
- 16: Schaft
- 18: Tellerelement
- 20: Betätigungseinrichtung
- 22: Fluidkanal
- 24: Ventilsitz
- 26: Steuerkammer
- 28: Steuerkolben
- 30: Hebelvorrichtung
- 32: Dichtvorrichtung
- 34: Arretiervorrichtung
- 36: Halterung
- 38: Arretierelement
- 40: Spannring
- 42: Nut
- 44: Nut
- 46: Durchgangsloch
- 48: Umfangsnut
- 50: Durchgangsloch

## Patentansprüche

1. Druckluftentnahmeventil (10), zur selektiven Entnahme von Druckluft aus einer Verbrennungskammer (14) einer Brennkraftmaschine, **dadurch gekennzeichnet, dass** das Druckluftentnahmeventil (10) eine Arretiervorrichtung (34), vorzugsweise Kugel-Arretiervorrichtung, aufweist und wobei die Arretiervorrichtung (34) aufweist:
einen Spannring (40);
einen Schaft (16), nämlich einen Ventilschaft des Druckluftentnahmeventils (10), der axial verschiebbar gelagert ist, koaxial innerhalb des Spannrings (40) angeordnet ist und eine Nut (44), vorzugsweise eine Ringnut, aufweist; und
mindestens ein Arretierelement (38), das zwischen dem Schaft (16) und dem Spannring (40) angeordnet ist, radial bezüglich des Schafts (16) bewegbar ist und von dem Spannring (40) zum Eingreifen in die Nut (44) zum axialen Arretieren des Schafts (16) vorgespannt ist;
wobei die Nut (44) das mindestens eine Arretierelement (38) zum Lösen der Arretierung des Schafts (16) radial weg von dem Schaft (16) verschiebt, wenn eine auf den Schaft (16) wirkende Axialkraft eine durch den Spannring (40) und das mindestens eine Arretierelement (38) bewirkte Arretierkraft überschreitet,
wobei das Druckluftentnahmeventil (10) mittels einer auf ein Tellerelement (18) des Druckluftentnahmeventils (10) wirkenden Gaskraft, die durch einen Zylinderdruck in einer Verbrennungskammer (14) der Brennkraftmaschine bewirkt wird, betätigbar, nämlich schließbar, ist, wobei die die Arretierkraft überschreitende Axialkraft zum Lösen der Arretierung teilweise oder vollständig durch die Gaskraft bewirkt wird.

2. Druckluftentnahmeventil (10) nach Anspruch 1, wobei
die Nut (44) eine gewölbte, gekrümmte, angefaste und/oder angeschrägte Kontaktfläche zum radialen Ausschieben des mindestens einen Arretierelements (38) aufweist; und/oder
das mindestens eine Arretierelement (38) eine gewölbte, gekrümmte, angefaste und/oder angeschrägte Kontaktfläche aufweist, um von der Nut (44) radial aus der Nut (44) ausgeschoben zu werden; und/oder
das mindestens eine Arretierelement (38) eine Kugel ist.

3. Druckluftentnahmeventil (10) nach Anspruch 1 oder Anspruch 2, wobei:
der Schaft (16) eine weitere Nut (42), vorzugsweise eine Ringnut, für das mindestens eine Arretierelement (38) aufweist, wobei die weitere Nut (42) axial versetzt zu der Nut (44) ist.

4. Druckluftentnahmeventil (10) nach Anspruch 3, wobei:
die weitere Nut (42) das mindestens eine Arretierelement (38) zum Lösen der Arretierung des Schafts (16) radial weg von dem Schaft (16) verschiebt, wenn eine auf den Schaft (16) wirkende Axialkraft eine durch den Spannring (40) und das mindestens eine Arretierelement (38) bewirkte Arretierkraft überschreitet; und/oder
die weitere Nut (42) wie die Nut (44) ausgeführt ist.

5. Druckluftentnahmeventil (10) nach einem der vorherigen Ansprüche, wobei:
das mindestens eine Arretierelement (38) mehrere in Umfangsrichtung um den Schaft (16) herum angerordnete Arretierelemente (38) aufweist, die symmetrisch um den Schaft (16) herum angeordnet sind und eine ungerade Anzahl aufweisen.

6. Druckluftentnahmeventil (10) nach einem der vorherigen Ansprüche, ferner aufweisend:
eine Halterung (36), die das mindestens eine Arretierelement (38) und/oder den Spannring (40) hält.

7. Druckluftentnahmeventil (10) nach Anspruch 6, wobei:
die Halterung (36) das mindestens eine Arretierelement (38) und/oder den Spannring (40) bezüglich einer Axialrichtung des Schafts (16) fest hält; und/oder
die Halterung (36) das mindestens eine Arretierelement (38) und/oder den Spannring (40) bezüglich einer Radialrichtung des Schafts (16) beweglich hält; und/oder
die Halterung (36) eine äußere Umfangsnut (48) aufweist, in der der Spannring (40) gehalten ist; und/oder
die Halterung (36) ein axiales Durchgangsloch (46) für den Schaft (16) aufweist; und/oder
die Halterung (36) mindestens ein radiales Durchgangsloch (50) aufweist, in dem das mindestens eine Arretierelement (38) gehalten ist.

8. Druckluftentnahmeventil (10) nach einem der vorherigen Ansprüche, wobei:
der Spannring (40) als ein Elastomer-Spannring, vorzugsweise ein Gummispannring, oder eine Schlauchfeder ausgebildet ist.

9. Druckluftentnahmeventil (10) nach einem der vorherigen Ansprüche, wobei:
der Spannring (40) an dem mindestens einen Arretierelement (38) anliegt; und/oder
der Spannring (40) an einer Innenumfangsfläche des Spannrings (40) mindestens eine Aufnahme zum Halten des mindestens einen Arretierelements (38) aufweist.

10. Druckluftentnahmeventil (10) nach einem der vorherigen Ansprüche, wobei:
das Druckluftentnahmeventil (10) in einer Öffnungsstellung arretiert ist, wenn das mindestens eine Arretierelement (38) in die Nut (44) eingreift; und/oder
das Druckluftentnahmeventil (10) in einer Schließstellung arretiert ist, wenn das mindestens eine Arretierelement (38) in die weitere Nut (42) eingreift.

11. Druckluftentnahmeventil (10) nach einem der vorherigen Ansprüche, wobei:
das Druckluftentnahmeventil (10) elektrisch, elektromagnetisch, mechanisch, pneumatisch und/oder hydraulisch zum axialen Verschieben des Schafts (16) in eine Öffnungsstellung des Druckluftentnahmeventils (10), in der das mindestens eine Arretierelement (38) in die Nut (44) zum Arretieren des Schafts (16) eingreift, betätigbar ist.

12. Kraftfahrzeug, vorzugsweise Nutzfahrzeug, mit einem Druckluftentnahmeventil (10) nach einem der vorherigen Ansprüche.

## Claims

1. A compressed-air extraction valve (10) for selectively extracting compressed air from a combustion chamber (14) of an internal combustion engine, **characterized in that** the compressed-air extraction valve (10) has an arresting device (34), preferably ball-type arresting device, and wherein the arresting device (34) has:
a clamping ring (40);
a shank (16), specifically a valve shank of the compressed-air extraction valve (10), which shank is mounted in axially displaceable fashion, is arranged coaxially within the clamping ring (40) and has a groove (44), preferably an annular groove; and
at least one arresting element (38), which is arranged between the shank (16) and the clamping ring (40), is movable radially with respect to the shank (16) and is preloaded by the clamping ring (40) so as to engage into the groove (44) in order to axially arrest the shank (16);
wherein the groove (44) pushes the at least one arresting element (38) radially away from the shank (16), in order to eliminate the arresting of the shank (16), if an axial force acting on the shank (16) exceeds an arresting force imparted by the clamping ring (40) and the at least one arresting element (38),
wherein the compressed-air extraction valve (10) is actuatable, specifically closable, by means of a gas force which acts on a disc element (18) of the compressed-air extraction valve (10) and which is imparted by a cylinder pressure in a combustion chamber (14) of the internal combustion engine, wherein the axial force that exceeds the arresting force in order to eliminate the arresting is imparted partially or entirely by the gas force.

2. The compressed-air extraction valve (10) according to Claim 1, wherein
the groove (44) has an arched, curved, chamfered and/or bevelled contact surface for radially pushing out the at least one arresting element (38); and/or
the at least one arresting element (38) has an arched, curved, chamfered and/or bevelled contact surface in order to be pushed radially out of the groove (44) by the groove (44); and/or
the at least one arresting element (38) is a ball.

3. The compressed-air extraction valve (10) according to Claim 1 or 2, wherein:
the shank (16) has a further groove (42), preferably an annular groove, for the at least one arresting element (38), wherein the further groove (42) is axially offset with respect to the groove (44) .

4. The compressed-air extraction valve (10) according to Claim 3, wherein:
the further groove (42) displaces the at least one arresting element (38) radially away from the shank (16), in order to eliminate the arresting of the shank (16), if an axial force acting on the shank (16) exceeds an arresting force imparted by the clamping ring (40) and the at least one arresting element (38); and/or
the further groove (42) is designed similarly to the groove (44).

5. The compressed-air extraction valve (10) according to any one of the preceding claims, wherein:
the at least one arresting element (38) has multiple arresting elements (38) which are arranged in a circumferential direction around the shank (16) and which are arranged symmetrically around the shank (16) and which have an odd number.

6. The compressed-air extraction valve (10) according to any one of the preceding claims, furthermore having:
a bracket (36) which holds the at least one arresting element (38) and/or the clamping ring (40) .

7. The compressed-air extraction valve (10) according to Claim 6, wherein:
the bracket (36) holds the at least one arresting element (38) and/or the clamping ring (40) fixedly with respect to an axial direction of the shank (16); and/or
the bracket (36) holds the at least one arresting element (38) and/or the clamping ring (40) movably with respect to a radial direction of the shank (16); and/or
the bracket (36) has an outer circumferential groove (48) in which the clamping ring (40) is held; and/or
the bracket (36) has an axial passage hole (46) for the shank (16); and/or
the bracket (36) has at least one radial passage hole (50) in which the at least one arresting element (38) is held.

8. The compressed-air extraction valve (10) according to any one of the preceding claims, wherein:
the clamping ring (40) is in the form of an elastomer clamping ring, preferably a rubber clamping ring, or a tube spring.

9. The compressed-air extraction valve (10) according to any one of the preceding claims, wherein:
the clamping ring (40) lies against the at least one arresting element (38); and/or
the clamping ring (40) has, on an inner circumferential surface of the clamping ring (40), at least one receptacle for holding the at least one arresting element (38).

10. The compressed-air extraction valve (10) according to any one of the preceding claims, wherein:
the compressed-air extraction valve (10) is arrested in an open position when the at least one arresting element (38) engages into the groove (44); and/or
the compressed-air extraction valve (10) is arrested in a closed position when the at least one arresting element (38) engages into the further groove (42).

11. The compressed-air extraction valve (10) according to any one of the preceding claims, wherein:
the compressed-air extraction valve (10) is actuatable electrically, electromagnetically, mechanically, pneumatically and/or hydraulically in order to axially displace the shank (16) into an open position of the compressed-air extraction element (10) in which the at least one arresting element (38) engages into the groove (44) in order to arrest the shank (16).

12. A motor vehicle, preferably utility vehicle, having a compressed-air extraction valve (10) according to any one of the preceding claims.

## Revendications

1. Soupape d'extraction d'air comprimé (10), pour l'extraction sélective d'air comprimé d'une chambre de combustion (14) d'un moteur à combustion interne, **caractérisée en ce que** la soupape d'extraction d'air comprimé (10) comprend un dispositif d'arrêt (34), de préférence un dispositif d'arrêt à bille, et le dispositif d'arrêt (34) comprend :
une bague de serrage (40) ;
une tige (16), à savoir une tige de soupape de la soupape d'extraction d'air comprimé (10), qui est montée de manière déplaçable axialement, est agencée coaxialement à l'intérieur de la bague de serrage (40) et comprend une rainure (44), de préférence une rainure annulaire ; et
au moins un élément d'arrêt (38), qui est agencé entre la tige (16) et la bague de serrage (40), est mobile radialement par rapport à la tige (16) et est précontraint par la bague de serrage (40) pour pénétrer dans la rainure (44) pour l'arrêt axial de la tige (16) ;
la rainure (44) éloignant radialement l'au moins un élément d'arrêt (38) de la tige (16) pour défaire l'arrêt de la tige (16) lorsqu'une force axiale agissant sur la tige (16) dépasse une force d'arrêt exercée par la bague de serrage (40) et l'au moins un élément d'arrêt (38),
la soupape d'extraction d'air comprimé (10) étant actionnable, à savoir pouvant être fermée, au moyen d'une force de gaz agissant sur un élément disque (18) de la soupape d'extraction d'air comprimé (10), qui est exercée par une pression de cylindre dans la chambre de combustion (14) du moteur à combustion interne, la force axiale dépassant la force d'arrêt pour défaire l'arrêt étant exercée en partie ou en totalité par la force de gaz.

2. Soupape d'extraction d'air comprimé (10) selon la revendication 1, dans laquelle
la rainure (44) comprend une surface de contact bombée, incurvée, chanfreinée et/ou biaisée pour repousser radialement l'au moins un élément d'arrêt (38) ; et/ou
l'au moins un élément d'arrêt (38) comprend une surface de contact bombée, incurvée, chanfreinée et/ou biaisée, afin d'être poussé radialement hors de la rainure (44) par la rainure (44) ; et/ou
l'au moins un élément d'arrêt (38) est une bille.

3. Soupape d'extraction d'air comprimé (10) selon la revendication 1 ou la revendication 2, dans laquelle :
la tige (16) comprend une rainure supplémentaire (42), de préférence une rainure annulaire, pour l'au moins un élément d'arrêt (38), la rainure supplémentaire (42) étant décalée axialement par rapport à la rainure (44).

4. Soupape d'extraction d'air comprimé (10) selon la revendication 3, dans laquelle :
la rainure supplémentaire (42) éloigne radialement l'au moins un élément d'arrêt (38) de la tige (16) pour défaire l'arrêt de la tige (16) lorsqu'une force axiale agissant sur la tige (16) dépasse une force d'arrêt exercée par la bague de serrage (40) et l'au moins un élément d'arrêt (38) ; et/ou
la rainure supplémentaire (42) est réalisé comme la rainure (44).

5. Soupape d'extraction d'air comprimé (10) selon l'une quelconque des revendications précédentes, dans laquelle :
l'au moins un élément d'arrêt (38) comprend plusieurs éléments d'arrêt (38) agencés dans la direction périphérique autour de la tige (16), qui sont agencés symétriquement autour de la tige (16) et présentent un nombre impair.

6. Soupape d'extraction d'air comprimé (10) selon l'une quelconque des revendications précédentes, comprenant en outre :
un support (36), qui supporte l'au moins un élément d'arrêt (38) et/ou la bague de serrage (40).

7. Soupape d'extraction d'air comprimé (10) selon la revendication 6, dans laquelle :
le support (36) supporte de manière fixe l'au moins un élément d'arrêt (38) et/ou la bague de serrage (40) par rapport à une direction axiale de la tige (16) ; et/ou
le support (36) supporte de manière mobile l'au moins un élément d'arrêt (38) et/ou la bague de serrage (40) par rapport à une direction radiale de la tige (16) ; et/ou
le support (36) comprend une rainure périphérique extérieure (48), dans laquelle la bague de serrage (40) est supportée ; et/ou
le support (36) comprend un trou de passage axial (46) pour la tige (16) ; et/ou
le support (36) comprend au moins un trou de passage radial (50), dans lequel l'au moins un élément d'arrêt (38) est supporté.

8. Soupape d'extraction d'air comprimé (10) selon l'une quelconque des revendications précédentes, dans laquelle :
la bague de serrage (40) est configurée sous la forme d'une bague de serrage élastomère, de préférence d'une bague de serrage en caoutchouc, ou d'un ressort tubulaire.

9. Soupape d'extraction d'air comprimé (10) selon l'une quelconque des revendications précédentes, dans laquelle :
la bague de serrage (40) repose sur l'au moins un élément d'arrêt (38) ; et/ou
la bague de serrage (40) comprend, sur une surface périphérique intérieure de la bague de serrage (40), au moins un logement pour le support de l'au moins un élément d'arrêt (38).

10. Soupape d'extraction d'air comprimé (10) selon l'une quelconque des revendications précédentes, dans laquelle :
la soupape d'extraction d'air comprimé (10) est arrêtée dans une position d'ouverture lorsque l'au moins un élément d'arrêt (38) pénètre dans la rainure (44) ; et/ou
la soupape d'extraction d'air comprimé (10) est arrêtée dans une position de fermeture lorsque l'au moins un élément d'arrêt (38) pénètre dans la rainure supplémentaire (42).

11. Soupape d'extraction d'air comprimé (10) selon l'une quelconque des revendications précédentes, dans laquelle :
la soupape d'extraction d'air comprimé (10) est actionnable électriquement, électromagnétiquement, mécaniquement, pneumatiquement et/ou hydrauliquement pour le déplacement axial de la tige (16) dans une position d'ouverture de la soupape d'extraction d'air comprimé (10), dans laquelle l'au moins un élément d'arrêt (38) pénètre dans la rainure (44) pour l'arrêt de la tige (16).

12. Véhicule automobile, de préférence véhicule utilitaire, comprenant une soupape d'extraction d'air comprimé (10) selon l'une quelconque des revendications précédentes.
